# EUROPEAN PATENT SPECIFICATION

(11) **EP 4 125 293 B1**
(45) Date of publication and mention of the grant of the patent: **28.02.2024**
(21) Application number: 21188428.3
(22) Date of filing: 29.07.2021
(51) Int. Cl.: H04W 40/22, H04W 40/24, H04W 64/00, H04W 76/10, H04W 88/14, H04W 92/04

(54) **COMMUNICATION NETWORK ARRANGEMENT**
KOMMUNIKATIONSNETZANORDNUNG
AGENCEMENT DE RÉSEAU DE COMMUNICATION

(43) Date of publication of application: 01.02.2023
(73) Proprietor: NTT DOCOMO, INC., Chiyoda-Ku Tokyo 100-6150 (JP)
(72) Inventor: MUTIKAINEN, Jari, 80687 Munich (DE); GUERZONI, Riccardo, 80687 Munich (DE); MINOKUCHI, Atsushi, Tokyo 100-6150 (JP)
(74) Representative: Viering, Jentschura & Partner mbB Patent- und Rechtsanwälte

(56) References cited:
- CN-A- 107 623 906
- CN-A- 107 623 910
- CN-A- 111 918 279
- KR-A- 20200 020 544
- US-A1- 2017 339 609
- "3rd Generation Partnership Project; Technical Specification Group Services and System Aspects; System architecture for the 5G System (5GS); Stage 2 (Release 17)", 3GPP STANDARD; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V17.1.1 24 June 2021 (2021-06-24), pages 1-526, XP052029600, Retrieved from the Internet: URL:https://ftp.3gpp.org/Specs/archive/23_ series/23.501/23501-h11.zip 23501-h11.docx [retrieved on 2021-06-24]
- 3GPP: "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-527, XP051295448, [retrieved on 2016-12-16]

## Description

The present disclosure relates to communication network arrangements.

For the operation of a mobile radio communication system, various types of signalling information is exchanged between the radio access network and the core network of the mobile radio communication system. This includes in particular mobility management (MM) information and session management (SM) information for handling registration and sessions for mobile terminals. In a 5G communication system (in accordance with 3GPP (Third Generation Partnership Project)) both mobility management information as well as session management information are received by the Access and Mobility Management Function which processes mobility management information itself and forwards session management information to a Session Management Function (SMF).

Prior art is US 2017/339609 A1, KR 2020 0020544 A, 3GPP TS 23.501 V17.1.1, CN 107 623 910 A, CN 107 623 906 A, 3GPP TR 23.799 V14.0.0 and CN111918279 A.

Typically, it is desirable to keep the signalling and the communication resources used for signalling as little as possible. Accordingly, in particular, approaches are desirable to allow a more efficient handling of mobility management information and session management information.

The invention is defined in independent claim 1. Further features are defined in dependent claims.

In the following, various examples will be described in more detail.

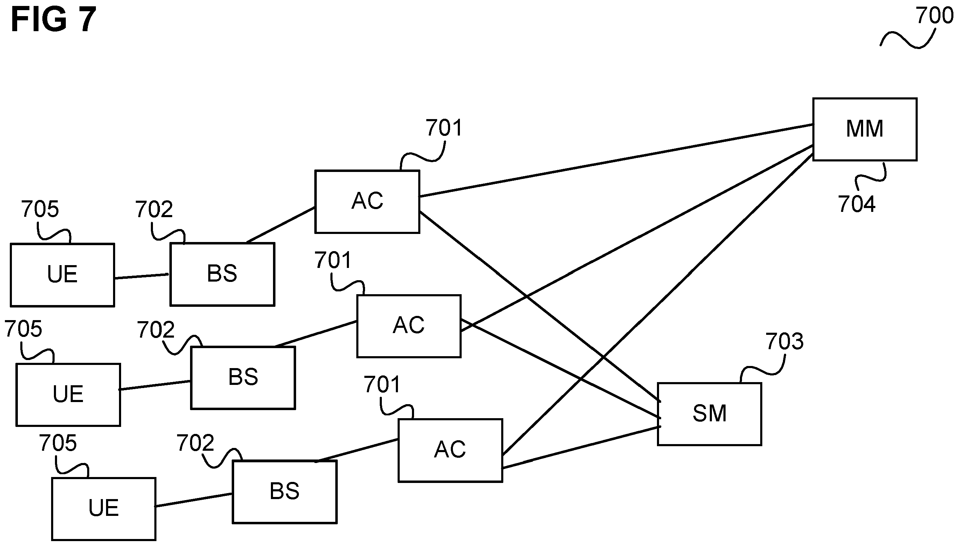

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
**In the following,** **fig. 7** **and its description is according to the invention as claimed. The rest of the description does not or does not fully correspond to the invention as claimed but is useful for understanding the invention.**
- FIG. 1: shows parts of a radio communication system, for example configured according to 5G (Fifth Generation) as specified by 3GPP (Third Generation Partnership Project).
- FIG. 2: shows parts of a radio communication system according to an embodiment.
- FIG. 3: shows an architecture where an access control function (ACF) is implemented as a distributed front end.
- FIG. 4: illustrates an integration of a CU-CP (Central Unit - Control Plane) with an ACF into one component.
- FIG. 5: shows a protocol stack according to an embodiment.
- FIG. 6: shows 5G protocol stacks.
- FIG. 7: shows a communication network arrangement according to an embodiment.
- FIG. 8: shows a communication network arrangement according to one embodiment, where there are multiple groups of access control components and each group is served by a respective session management (SM) component.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

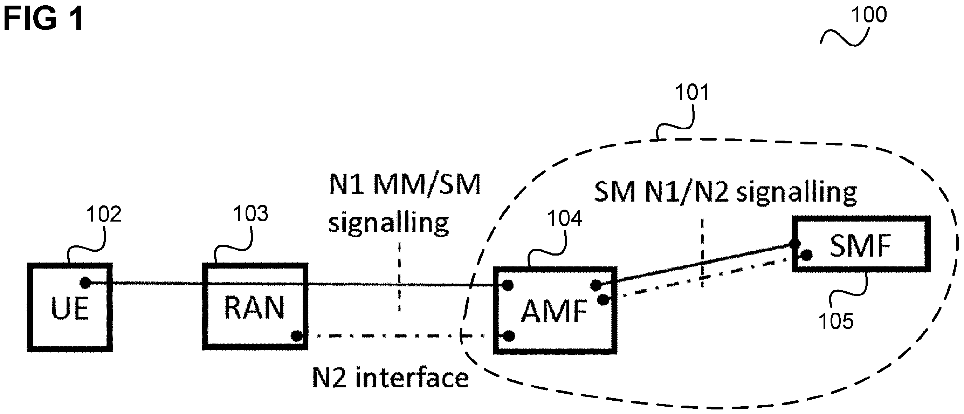

FIG. 1 shows parts of a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (5GC) 101 including an Access and Mobility Management Function (AMF) 104 connected to the RAN 103 and a Session Management Function (SMF) 105.

The core network 101 includes many more components which are not shown here like a Unified Data Management (UDM), a Network Slice Selection Function (NSSF), a User Plane Function (UPF), an AUSF (Authentication Server Function) or a PCF (Policy Control Function).

The interface between the UE 102 and the AMF is denoted as N1 interface. It can be seen to be part of the NAS (Non-Access Stratum).

The interface between the RAN 103 and the AMF 104 is denoted as N2 interface (and can be peer-to-peer-based or service-based). It can be seen as an access-specific interface in the sense that it depends on the RAN 103.

The AMF 104 forwards the session management (SM) information (which it receives via the N1 or the N2 interface from the UE 102 and the RAN 103, respectively) to the SMF, i.e. forwards SM-related N1 and N2 signalling information to the SMF 105.

The AMF 104 is a centralized front end for N1 and N2 signalling in the 5G architecture of FIG. 1, i.e. it is responsible for a plurality of base stations, i.e. the RAN 103 served by the AMF 104 includes a plurality of base stations.

It may be of an advantage to re-distribute network functions between Radio Access Network 103 and Core Network 101 (e.g. for 6G). This is also referred as "RAN-CN convergence". It may for example allow the extension of the service-based architecture (currently adopted only in the 3GPP 5G CN) to some RAN functions, with benefits in terms of adoption of virtualized deployments.

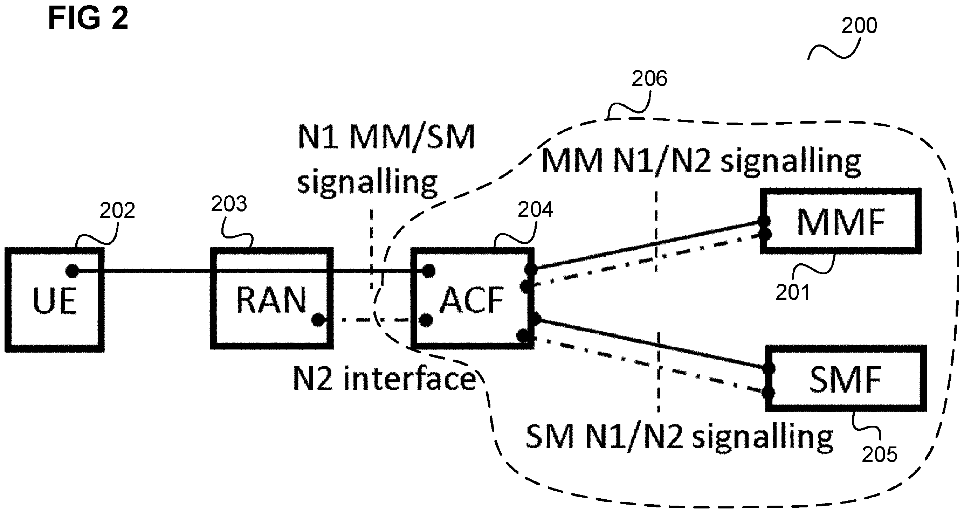

Therefore, according to various embodiments, the 5G AMF (Access Control and Mobility Function) is split into an access specific functions: ACF (Access Control Function) and an access agnostic Mobility Management function (MMF) as it is illustrated in FIG. 2.

FIG. 2 shows parts of a radio communication system 200.

Similar to the radio communication system 100 of FIG. 1, the radio communication system 200 includes a core network 201, a UE 202, a RAN 203 and an SMF 205.

However, in contrast to the radio communication system 100 of FIG. 1, the radio communication system 200 includes an ACF 204 and an MMF 206.

The ACF 204 implements the NAS (Non Access Stratum) front end of the network side to the UE, terminating the N1 (i.e. NAS) security. Further, the ACF 204 performs MM N1 and N2 signalling with the MMF 206 and SM N1 and N2 signalling with the SMF 205, i.e. exchanges MM/SM signalling information with the MMF/SMF which it receives and sends via the N1 interface and N2 interface.

In other words, the ACF separates (decouples) MM signalling information from SM signalling information and interacts in parallel with MMF and SMF. The MM N1/N2 procedures are thus decoupled from the SM N1/N2 procedures.

According to one embodiment, the ACF 204 is a distributed front end for N1 and N2 signalling, i.e. there are a plurality of ACFs which each serve at least one base station (but fewer than are for example served by the AMF 104 and fewer than are served by the SMF 205 and the MMF 206).

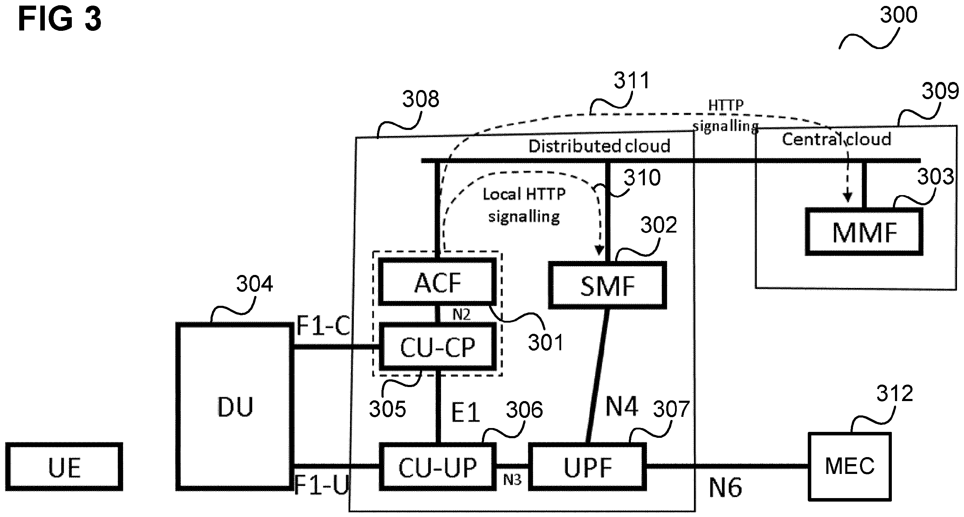

FIG. 3 shows an architecture where the ACF is a distributed front end.

In this example, an ACF 301 and an SMF 302 are implemented by a distributed data centre (or "distributed cloud") 308 while an MMF 303 is implemented by a central data centre (or "central cloud") 309. The terms distributed data centre/cloud vs. central data centre/cloud means that the ACF 301 and the SMF 302 are responsible for serving a lower number of base stations (i.e. have a smaller service area) than the MMF 303 and that they are placed (geographically) nearer to the base stations they serve than the MMF 303, i.e. ACF 301 and SMF 302 are local while MMF 303 is central.

A base station (gNB) is here represented by its components DU (Distributed Unit) 304, CU-CP (Central Unit - Control Plane) 305 and CU-UP (Central Unit - User Plane) 306.

CU (including CU-CP 305 and CU-UP 306) provides support for the higher layers of the protocol stack such as SDAP (Service Data Adaptation Protocol), PDCP (Packet Data Convergence Protocol) and RRC (Radio Resource Control) while DU provides support for the lower layers of the protocol stack such as RLC, MAC and Physical layer.

Typically, there is a single CU for each base station (gNB), but one CU can control multiple DUs. Each DU is able to support one or more cells, so one gNB can control hundreds of cells. The interface between CU and DU is named F1.

The distributed data centre further implements a User Plane Function (UPF) 307 which for example connected to a MEC (Multi Access Edge Computing) component 312.

By means of the ACF 301, the MM N1/N2 procedures can be performed separately and in parallel with MM N1/N2 procedures.

The frequency of MM updates and SM updates can be different: an MM update i.e. MM signalling 311 is only needed for registration and mobility tracking and thus is not needed as frequently as an SM update, i.e. SM signalling 310. In the architecture of FIG. 3, SM NAS requests can be processed locally.

This is because the SMF 302 is, in comparison to the MMF 303, local, i.e. the service area of the SMF 302 (i.e. the area containing base stations for which the SMF 302 performs SM) is smaller than the service area of the (central) MMF 303 (i.e. the area containing base stations for which the MMF 303 performs MM).

Thus, SM NAS requests can be processed locally and are not delayed by the long-distance MM procedures. This has benefits in terms of Control Plane latency and signalling load reduction towards the central cloud 309.

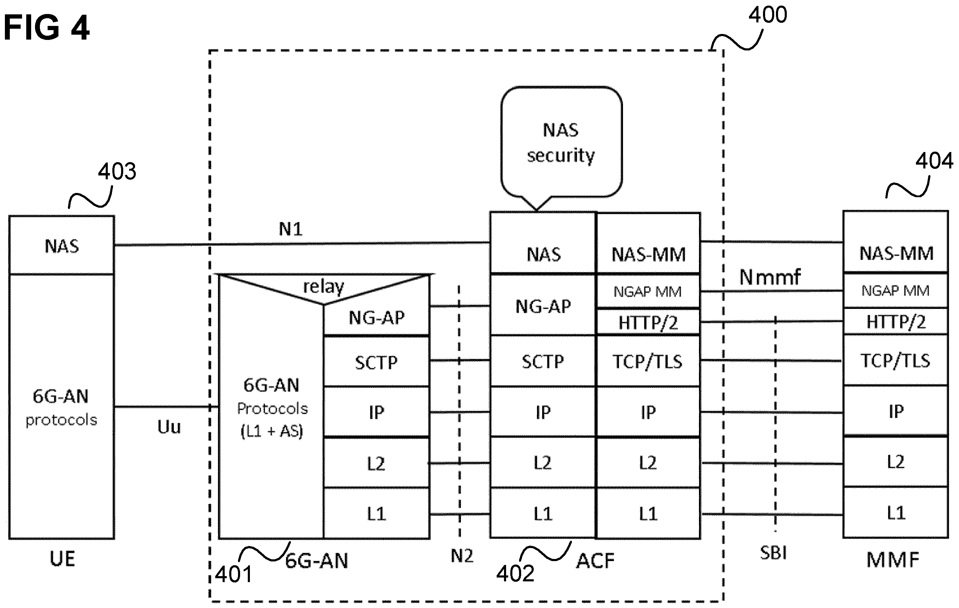

Furthermore, since ACF 301 may be co-located with the (6G) RAN control plane function CU-CP 305 as shown in FIG. 3 it can be combined with it as it is illustrated in FIG. 4.

FIG. 4 illustrates an integration of a CU-CP with an ACF into one component 400.

The resulting component realizes the Uu interface and N1 interface to a UE 403 as well as the service-based interface (SBI) to the MMF 404 (corresponding to MMF 303). The CU-CP component 401, denoted as 6G-AN, and the ACF component 402 are connected by the N2 interface.

SBI is the term given to the API based communication that can take place between two VNFs (Virtualized Network Functions) within the 5G SBA (Service Based Architecture). A given VNF can utilise an API call over the SBI in order to invoke a particular service or service operation.

The combination of CU-CP and ACF allows removal 3GPP specific legacy protocols (i.e. not commonly supported by all IT equipment) in the N2 interface like SCTP (Stream Control Transmission Protocol) which is not virtualization friendly (e.g. to implement in virtualization platforms). Furthermore, the combination of CU-CP and ACF allows simplifying the system architecture by combining overlapping functions. This leads to performance enhancements.

The provision of an ACF as a distributed N1/N2 front end further leads to reduced power consumption both on the UE side as well as the RAN side: services that require low latency communication requirements typically use always-on connectivity. However, the UE always being in Connected Mode leads to battery consumption issues. By the ACF, a Service Request procedure to resume from Idle Mode can be faster: idle mode can be used instead of always-on connections, with benefits in terms of battery consumption. By the reducing the number of always-on connected UEs, also the power consumption in the RAN can be reduced.

Additionally, the (local) ACF may enable Control Plane notifications (from the ACF), which (the ACF being co-located with the RAN) may hold much richer information on the UE. In should be noted that in Rel-17, 5G implements notifications from the UPF to the application layer which are limited to information available at the UPF, i.e. QoS monitoring information.

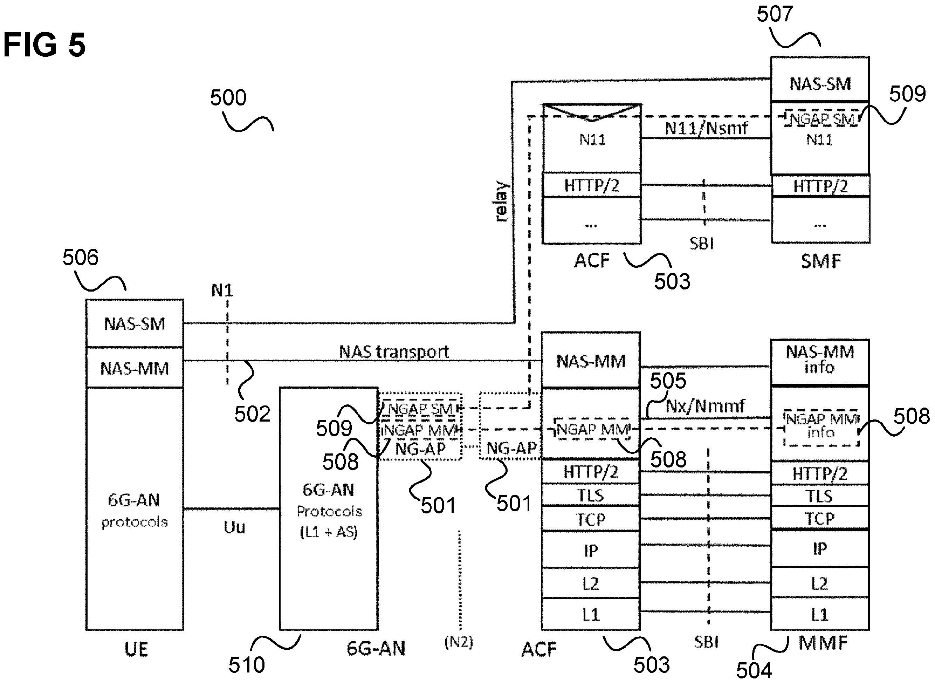

FIG. 5 shows a protocol stack 500 according to an embodiment implemented by ACF 503, MMF 504, UE 506, SMF 507, 6G-AN 510.

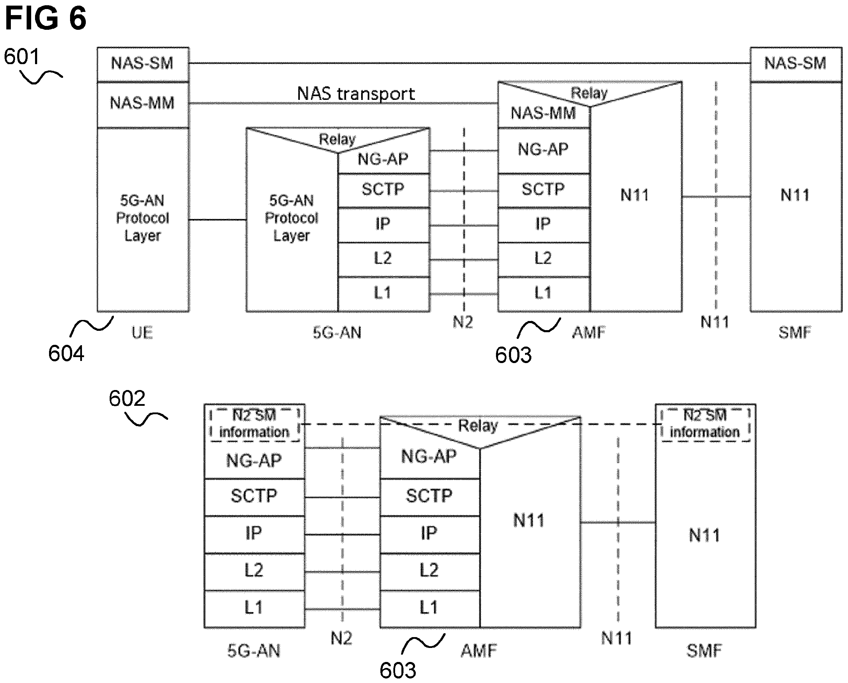

FIG. 6 shows 5G protocol stacks 601, 602 for comparison.

In the protocol stack 500, the NG-AP (Next Generation - Application Protocol) 501 and the NAS transport (including security header) 502 terminate in the ACF 503 like in case of 5G in the AMF 603. One single ACF 503 is shown handling the SB (service-based) interfaces to the MMF 504 and the SMF 507.

This way the ACF 503 can determine the N2 MM information and the (N1) NAS-MM information and send the relevant information elements to the MMF 504 via an Nx/Nmmf interface 505 (which is added with respect to the 5G architecture, i.e. is not present in the 5G architecture).

The interface between the UE 506 and the ACF 503 may be the same as the interface between the (5G) UE 604 and the AMF 603.

The NG-AP 501 is optional: if the 6G NodeB is integrated with the ACF 503, the NG-AP 501 is not necessary. In this case, only the NGAP (NG Application Protocol) for MM signalling information 508 and NGAP for SM signalling information 509 exist, but not the NGAP transport between the 6G-AN 510 and the ACF 503.

The ACF 503 (local or central)
- Terminates SCTP
- Terminates the N1/NAS security
- Obtains the UE context from MMF and stores it.
- Splits the N1 into SM and MM containers (NAS-MM container introduced with respect to 5G; the NAS-SM container may be implemented as in 5G)
- Splits the N2 into SM and MM containers (NGAP-MM container introduced with respect to 5G; the NAS-SM container may be implemented as in 5G)
- Implements the N11 interface with SMF 507 (which may be implemented as in 5G). N11 is the reference point between the ACF 503 and the SMF 507 and Nsmf is the service-based interface exhibited by SMF 507.
- Implements the Nx interface (service-based) (of Nx/Nmmf interface 505) to the MMF 504. Nx is the reference point between the ACF 503 and the MMF. Nmmf is the service-based interface exhibited by MMF 504.

The MMF 504 (central) implements the Nmmf service-based interface (of Nx/Nmmf interface 505) to support the NAS-MM and NGAP-MM procedures (registration (user authentication), Registration Area update) on the Nx reference point with the ACF 503. In summary, according to various embodiments, a communication network arrangement is provided as illustrated in figure 7.

FIG. 7 shows a communication network arrangement 700 according to an embodiment.

The communication network arrangement includes a plurality of access control components 701, wherein each of the plurality of access components 701 is connected to at least one base station 702 and configured to exchange session management signalling information and mobility management information related to a mobile terminal 705 connected to the communication network via the at least one base station with the at least one base station 702 .

The communication network arrangement 700 further includes a session management component 703, wherein each of the plurality of access components 701 is configured to forward session management information related to a mobile terminal connected to the communication network via the at least one base station received from the at least one base station 702 to the session management component 703.

Additionally, the communication network arrangement 700 includes a mobility management component 704 wherein each of the plurality of access components 701 is configured to forward mobility management information related to a mobile terminal connected to the communication network via the at least one base station received from the at least one base station 702 to the mobility management component 704.

According to various embodiments, in other words, access control components (e.g. Access Control Functions) are connected between the RAN and mobility management components and session management components, wherein multiple access control components forward mobility management information to the same mobility management component and to the same session management component.

In particular, not according to the invention as claimed, there are more access control components than mobility management components. This allows the access control components to be co-located with base stations (or at least placed geographically nearer to the base stations they serve than the mobility management components).

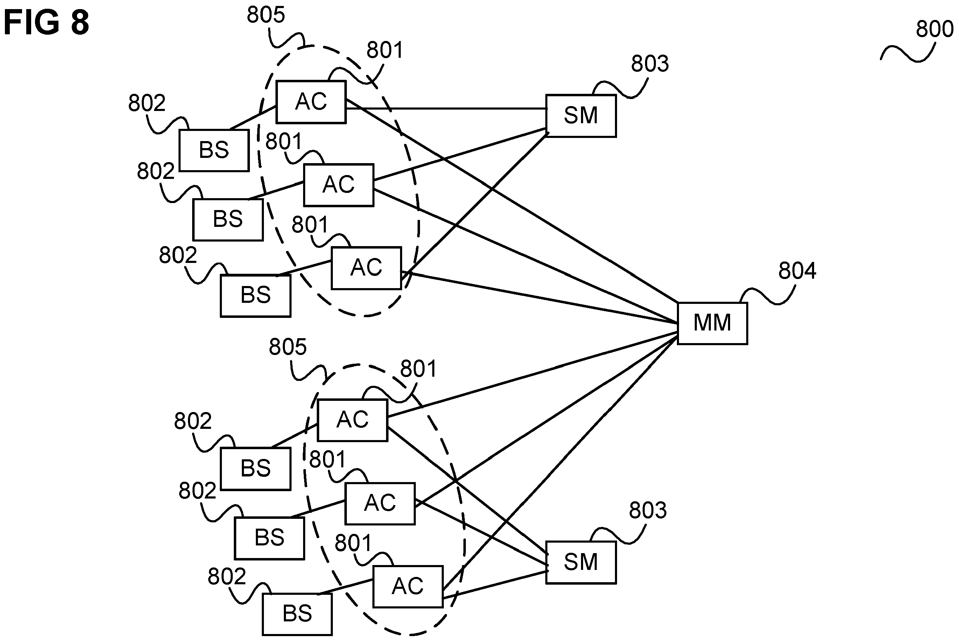

Not according to the invention as claimed, there are multiple SM components such that each SM component can for example be co-located with a group of access control components (e.g. in a distributed data centre as described above) while the MM component is shared and is placed farther away (e.g. in a central location). This is illustrated in FIG. 8.

FIG. 8 shows a communication network arrangement 800 according to various embodiments, where there are multiple groups 805 of access control components 801 and each group 805 is served by a respective SM component 803 but all groups share a common (i.e. are shared by the same) MM component 804.

It should be noted that the access control components 801 are not necessarily statically connected with the SM components. With the service-based architecture, each access control component 801 may discover and select a different SM component 803 each time the access control component 801 needs to invoke an SM service. In that sense, the grouping of the access components 801 indicated in FIG. 8 is not fixed and may dynamically changed. FIG. 8 should therefore be understood as that multiple access control components 801 which are served by a single MM component may be served by multiple SM components 803.

Each access control component 701, 801 can be seen as having an access-specific interface to the radio access network (i.e. an interface which depends on the characteristics of the radio access network) and a service-based interface to the mobility management component (e.g. MMF) or session management component (e.g. SMF).

This means that each access control component is configured to receive MM and SM related information via the access-specific interface and is configured to distribute the MM related information via a service-based interface to the MM component and the SM related information via a service-based interface to the SM component.

The service-based interface may for example be based on HTTP (Hypertext Transfer Protocol). The service-based interface (SBI) implies that each AC component 801 can invoke services from a multiplicity of SM components 803 that expose the SBI: at the time of invoking the SM service, the AC component performs discovery and selection of the SM component from a plurality of SM components. Then, the AC component invokes the SBI exposed by the selected SM component. Similarly, at the time of invoking the MM service, the AC component performs discovery and selection of the MM component from a plurality of MM components.

According to various embodiments, each access control component 701, 801 can be seen as a distributed Control Plane (N1/N2) signalling front end, able to terminate the NAS signalling and handle separate MM and SM signalling with the MMF and SMF respectively. This allows network architecture simplification, faster control plane operations, benefits for the user in terms of battery consumption and richer notifications from the Control Plane to the application layer.

Thus, according to various embodiments, in a communication network, a Control Plane function (ACF) handles Non-Access Stratum (N1) signalling from the UE for both Mobility Management and Session Management and access node (N2) signalling for both Mobility Management and Session Management and handles the MM signalling with a second Control Plane function (MMF) for both Non-Access Stratum (N1) and access network (N2) signalling and the SM signalling with a third Control Plane function (SMF) for both Non-Access Stratum (N1) and access network (N2) signalling.

The interface between ACF and MMF and the interface between ACF and SMF is for example service-based.

The components of the communication network arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning of the claims are therefore intended to be embraced.

## Claims

1. A communication network arrangement comprising:
a plurality of access control components (701, 801), wherein each of the plurality of access components (701, 801) is connected to at least one base station (702, 802) and configured to exchange session management signalling information and mobility management information related to a mobile terminal (705) connected to the communication network via the at least one base station (702, 802) with the at least one base station (702, 802);
a session management component (703, 803), wherein each of the plurality of access control components (701, 801) is configured to forward session management information related to a mobile terminal (705) connected to the communication network via the at least one base station (702, 802) received from the at least one base station (702, 802) to the session management component (703, 803); and
a mobility management component (704, 804) wherein each of the plurality of access control components (701, 801) is configured to forward mobility management information related to a mobile terminal (705) connected to the communication network via the at least one base station (702, 802) received from the at least one base station (702, 802) to the mobility management component (704, 804).

2. The communication network arrangement of claim 1, wherein the session management signalling information and mobility management information related to a mobile terminal (705) connected to the communication network via the at least one base station (702, 802) received from the at least one base station (702, 802) includes signalling information exchanged between the mobile terminal (705) and an access control component of the plurality of access control components (701, 801) and relayed by the at least one base station (702, 802) and signalling information exchanged between the base station (702, 802) and an access control component of the plurality of access control components (701, 801) and related to the mobile terminal (705) connected to the communication network via the at least one base station (702, 802).

3. The communication network arrangement of claim 1 or 2, comprising a local data centre implementing the access control components (701, 801) and the session management component (703, 803) and comprising a central data centre implementing the mobility management component (704, 804).

4. The communication network arrangement of any one of claims 1 to 3, wherein each of the plurality of access control components (701, 801) is configured to exchange the session management signalling information and the mobility management information related to a mobile terminal (705) connected to the communication network via the at least one base station (702, 802) with the at least one base station (702, 802) via an interface specific for a radio access network comprising the at least one base station (702, 802).

5. The communication network arrangement of any one of claims 1 to 4, wherein each of the plurality of access control components (701, 801) is configured to forward the session management information related to a mobile terminal (705) connected to the communication network via the at least one base station (702, 802) received from the at least one base station (702, 802) via a service-based interface to the session management component (703, 803) after performing a discovery and a selection of the session management component (703, 803) from a plurality of session management components (703, 803).

6. The communication network arrangement of any one of claims 1 to 5, wherein each of the plurality of access control components (701, 801) is configured to forward the mobility management information related to a mobile terminal (705) connected to the communication network via the at least one base station (702, 802) received from the at least one base station (702, 802) via a service-based interface to the mobility management component (704, 804) after performing a discovery and a selection of the session management component (703, 803) from a plurality of session management components (703, 803).

7. The communication network arrangement of any one of claims 1 to 6, wherein each of the plurality of access control components (701, 801) is further configured to receive session management information from the session management component (703, 803) and to forward the received session management information to the at least one base station (702, 802).

8. The communication network arrangement of any one of claims 1 to 7, wherein each of the plurality of access control components (701, 801) is further configured to receive mobility management information from the mobility management component (704, 804) and to forward the received mobility management information to the at least one base station (702, 802).

9. The communication network arrangement of any one of claims 1 to 8, wherein the session management component (703, 803) is a Session Management Function.

10. The communication network arrangement of any one of claims 1 to 9, wherein each of the plurality of access control components (701, 801) is implemented by a computer system which is placed geographically nearer to the at least one base station (702, 802) than the mobility management component (704, 804).

11. The communication network arrangement of any one of claims 1 to 10, wherein the session management component (703, 803) is implemented by a computer system which is placed geographically nearer to the base stations (702, 802) to which the plurality of access control components (701, 801) are connected and with which the plurality of access control components (701, 801) are configured to exchange session management signalling information and mobility management information than the mobility management component (704, 804).

12. The communication network arrangement of any one of claims 1 to 11, wherein each of at least some of the plurality of access control components (701, 801) is combined with a respective control plane radio access network component.

## Patentansprüche

1. Eine Kommunikationsnetzwerkanordnung, umfassend:
eine Mehrzahl von Zugangssteuerungskomponenten (701, 801), wobei jede der Mehrzahl von Zugangskomponenten (701, 801) mit mindestens einer Basisstation (702, 802) verbunden ist und eingerichtet ist, Sitzungsmanagementsignalisierungsinformation und Mobilitätsmanagementinformation bezüglich eines Mobilendgeräts (705), das mit dem Kommunikationsnetzwerk über die mindestens eine Basisstation (702, 802) verbunden ist, mit der mindestens einen Basisstation (702, 802) auszutauschen;
eine Sitzungsmanagementkomponente (703, 803), wobei jede der Mehrzahl von Zugangssteuerungskomponenten (701, 801) eingerichtet ist, Sitzungsmanagementinformation, die von der mindestens einen Basisstation (702, 802) empfangen ist, bezüglich eines Mobilendgeräts (705), das mit dem Kommunikationsnetzwerk über die mindestens eine Basisstation (702, 802) verbunden ist, an die Sitzungsmanagementkomponente (703, 803) weiterzuleiten; und
eine Mobilitätsmanagementkomponente (704, 804), wobei jede der Mehrzahl von Zugangssteuerungskomponenten (701, 801) eingerichtet ist, um Mobilitätsmanagementinformation, die von der mindestens einen Basisstation (702, 802) empfangen ist, bezüglich eines Mobilendgeräts (705), das mit dem Kommunikationsnetzwerk über die mindestens eine Basisstation (702, 802) verbunden ist, an die Mobilitätsmanagementkomponente (703, 803) weiterzuleiten.

2. Die Kommunikationsnetzwerkanordnung gemäß Anspruch 1, wobei die Sitzungsmanagementsignalisierungsinformation und Mobilitätsmanagementinformation, die von der mindestens einen Basisstation (702, 802) empfangen ist, bezüglich eines Mobilendgeräts (705), das mit dem Kommunikationsnetzwerk über die mindestens eine Basisstation (702, 802) verbunden ist,
Signalisierungsinformation, die zwischen dem Mobilendgerät (705) und einer Zugangssteuerungskomponente der Mehrzahl von Zugangssteuerungskomponenten (701, 801) ausgetauscht und mittels der mindestens einen Basisstation (702, 802) weitergeleitet ist, und
Signalisierungsinformation, die zwischen der Basisstation (702, 802) und einer Zugangssteuerungskomponente der Mehrzahl von Zugangssteuerungskomponenten (701, 801) ausgetauscht ist, und sich auf das Mobilendgerät (705) bezieht, das mit dem Kommunikationsnetzwerk über die mindestens eine Basisstation (702, 802) verbunden ist, enthält.

3. Die Kommunikationsnetzwerkanordnung gemäß Anspruch 1 oder 2, umfassend ein lokales Datencenter, das die Zugangssteuerungskomponenten (701, 801) und die Sitzungsmanagementkomponente (703, 803) implementiert, und umfassend ein zentrales Datencenter, das die Mobilitätsmanagementkomponente (704, 804) implementiert.

4. Die Kommunikationsnetzwerkanordnung gemäß einem der Ansprüche 1 bis 3, wobei jede der Mehrzahl von Zugangssteuerungskomponenten (701, 801) eingerichtet ist, die Sitzungsmanagementsignalisierungsinformation und die Mobilitätsmanagementinformation bezüglich eines Mobilendgeräts (705), das mit dem Kommunikationsnetzwerk über die mindestens eine Basisstation (702, 802) verbunden ist, mit der mindestens einen Basisstation (702, 802) über eine Schnittstelle, die spezifisch für ein Funkzugangsnetzwerk ist, das die mindestens eine Basisstation (702, 802) enthält, auszutauschen.

5. Die Kommunikationsnetzwerkanordnung gemäß einem der Ansprüche 1 bis 4, wobei jede der Mehrzahl von Zugangssteuerungskomponenten (701, 801) eingerichtet ist, die Sitzungsmanagementinformation, die von der mindestens einen Basisstation (702, 802) empfangen ist, bezüglich eines Mobilendgeräts (705), das mit dem Kommunikationsnetzwerk über die mindestens eine Basisstation (702, 802) verbunden ist, über eine dienstbasierte Schnittstelle an die Sitzungsmanagementkomponente (703, 803) nach der Durchführung einer Ermittlung und einer Auswahl der Sitzungsmanagementkomponente (703, 803) aus einer Mehrzahl von Sitzungsmanagementkomponenten (703, 803) weiterzuleiten.

6. Die Kommunikationsnetzwerkanordnung gemäß einem der Ansprüche 1 bis 5, wobei jede der Mehrzahl von Zugangssteuerungskomponenten (701, 801) eingerichtet ist, die Mobilitätsmanagementinformation, die von der mindestens einen Basisstation (702, 802) empfangen ist, bezüglich eines Mobilendgeräts (705), das mit dem Kommunikationsnetzwerk über die mindestens eine Basisstation (702, 802) verbunden ist, über eine dienstbasierte Schnittstelle an die Mobilitätsmanagementkomponente (704, 804) nach der Durchführung einer Ermittlung und einer Auswahl der Sitzungsmanagementkomponente (703, 803) aus einer Mehrzahl von Sitzungsmanagementkomponenten (703, 803) weiterzuleiten.

7. Die Kommunikationsnetzwerkanordnung gemäß einem der Ansprüche 1 bis 6, wobei jede der Mehrzahl von Zugangssteuerungskomponenten (701, 801) weiter eingerichtet ist, Sitzungsmanagementinformation von der Sitzungsmanagementkomponente (703, 803) zu empfangen und die empfangene Sitzungsmanagementinformation an die mindestens eine Basisstation (702, 802) weiterzuleiten.

8. Die Kommunikationsnetzwerkanordnung gemäß einem der Ansprüche 1 bis 7, wobei jede der Mehrzahl von Zugangssteuerungskomponenten (701, 801) weiter eingerichtet ist, Mobilitätsmanagementinformation von der Mobilitätsmanagementkomponente (704, 804) zu empfangen und die empfangene Mobilitätsmanagementinformation an die mindestens eine Basisstation (702, 802) weiterzuleiten.

9. Die Kommunikationsnetzwerkanordnung gemäß einem der Ansprüche 1 bis 8, wobei die Sitzungsmanagementkomponente (703, 803) eine Sitzungsmanagementfunktion ist.

10. Die Kommunikationsnetzwerkanordnung gemäß einem der Ansprüche 1 bis 9, wobei jede der Mehrzahl von Zugangssteuerungskomponenten (701, 801) mittels eines Computersystems implementiert ist, das geographisch näher an der mindestens einen Basisstation (702, 802) als die Mobilitätsmanagementkomponente (704, 804) platziert ist.

11. Die Kommunikationsnetzwerkanordnung gemäß einem der Ansprüche 1 bis 10, wobei die Sitzungsmanagementkomponente (703, 803) mittels eines Computersystems implementiert ist, das geographisch näher an der Basisstation (702, 802), mit der die Mehrzahl von Zugangssteuerungskomponenten (701, 801) verbunden sind und mit der die Mehrzahl von Zugangssteuerungskomponenten (701, 801) eingerichtet sind, Sitzungsmanagementsignalisierungsinformation und Mobilitätsmanagementinformation auszutauschen, als die Mobilitätsmanagementkomponente (704, 804) platziert ist.

12. Die Kommunikationsnetzwerkanordnung gemäß einem der Ansprüche 1 bis 11, wobei jede von mindestens einigen der Mehrzahl von Zugangssteuerungskomponenten (701, 801) mit einer jeweiligen Steuerungsebenenfunkzugangsnetzwerkkomponente kombiniert ist.

## Revendications

1. Agencement de réseau de communication, comprenant :
une pluralité de composants de contrôle d'accès (701, 801), chacun de la pluralité de composants d'accès (701, 801) étant connecté à au moins une station de base (702, 802) et configuré pour échanger avec ladite au moins une station de base (702, 802) des informations de signalisation de gestion de session et des informations de gestion de mobilité relatives à un terminal mobile (705) connecté au réseau de communication via ladite au moins une station de base (702, 802) ;
un composant de gestion de session (703, 803), dans lequel chacun de la pluralité de composants de contrôle d'accès (701, 801) est configuré pour transmettre au composant de gestion de session (703, 803) des informations de gestion de session relatives à un terminal mobile (705) connecté au réseau de communication via ladite au moins une station de base (702, 802) reçues de ladite au moins une station de base (702, 802) ; et
un composant de gestion de mobilité (704, 804), dans lequel chacun de la pluralité de composants de contrôle d'accès (701, 801) est configuré pour transmettre au composant de gestion de mobilité (704, 804) des informations de gestion de mobilité relatives à un terminal mobile (705) connecté au réseau de communication via ladite au moins une station de base (702, 802) reçues de ladite au moins une station de base (702, 802).

2. Agencement de réseau de communication selon la revendication 1, dans lequel les informations de signalisation de gestion de session et les informations de gestion de mobilité relatives à un terminal mobile (705) connecté au réseau de communication via ladite au moins une station de base (702, 802) reçues de ladite au moins une station de base (702, 802) comprennent :
des informations de signalisation échangées entre le terminal mobile (705) et un composant de contrôle d'accès de la pluralité de composants de contrôle d'accès (701, 801) et relayées par ladite au moins une station de base (702, 802) et
des informations de signalisation échangées entre la station de base (702, 802) et un composant de contrôle d'accès de la pluralité de composants de contrôle d'accès (701, 801) et relatives au terminal mobile (705) connecté au réseau de communication via ladite au moins une station de base (702, 802).

3. Agencement de réseau de communication selon la revendication 1 ou 2, comprenant un premier centre de données local mettant en œuvre les composants de contrôle d'accès (701, 801) et le composant de gestion de session (703, 803) et comprenant un centre de données central mettant en œuvre le composant de gestion de mobilité (704, 804).

4. Agencement de réseau de communication selon l'une quelconque des revendications 1 à 3, dans lequel chacun de la pluralité de composants de contrôle d'accès (701, 801) est configuré pour échanger les informations de signalisation de gestion de session et les informations de gestion de mobilité relatives à un terminal mobile (705) connecté au réseau de communication via ladite au moins une station de base (702, 802) avec ladite au moins une station de base (702, 802) via une interface spécifique à un réseau d'accès radio comprenant ladite au moins une station de base (702, 802).

5. Agencement de réseau de communication selon l'une quelconque des revendications 1 à 4, dans lequel chacun de la pluralité de composants de contrôle d'accès (701, 801) est configuré pour transmettre les informations de gestion de session relatives à un terminal mobile (705) connecté au réseau de communication via ladite au moins une station de base (702, 802) reçues de ladite au moins une station de base (702, 802) via une interface à base de service au composant de gestion de session (703, 803) après avoir effectué une découverte et une sélection du composant de gestion de session (703, 803) parmi une pluralité de composants de gestion de session (703, 803).

6. Agencement de réseau de communication selon l'une quelconque des revendications 1 à 5, dans lequel chacun de la pluralité de composants de contrôle d'accès (701, 801) est configuré pour transmettre les informations de gestion de mobilité relatives à un terminal mobile (705) connecté au réseau de communication via ladite au moins une station de base (702, 802) reçues de ladite au moins une station de base (702, 802) via une interface à base de service au composant de gestion de mobilité (704, 804) après avoir effectué une découverte et une sélection du composant de gestion de session (703, 803) à partir d'une pluralité de composants de gestion de session (703, 803).

7. Agencement de réseau de communication selon l'une quelconque des revendications 1 à 6, dans lequel chacun de la pluralité de composants de contrôle d'accès (701, 801) est en outre configuré pour recevoir des informations de gestion de session du composant de gestion de session (703, 803) et pour transmettre les informations de gestion de session reçues à ladite au moins une station de base (702, 802).

8. Agencement de réseau de communication selon l'une quelconque des revendications 1 à 7, dans lequel chacun de la pluralité de composants de contrôle d'accès (701, 801) est en outre configuré pour recevoir des informations de gestion de mobilité du composant de gestion de mobilité (704, 804) et pour transmettre les informations de gestion de mobilité reçues à ladite au moins une station de base (702, 802).

9. Agencement de réseau de communication selon l'une quelconque des revendications 1 à 8, dans lequel le composant de gestion de session (703, 803) est une fonction de gestion de session.

10. Agencement de réseau de communication selon l'une quelconque des revendications 1 à 9, dans lequel chacun de la pluralité de composants de contrôle d'accès (701, 801) est mis en œuvre par un système informatique qui est placé géographiquement plus près de ladite au moins une station de base (702, 802) que le composant de gestion de mobilité (704, 804) .

11. Agencement de réseau de communication selon l'une quelconque des revendications 1 à 10, dans lequel le composant de gestion de session (703, 803) est mis en œuvre par un système informatique qui est placé géographiquement plus près des stations de base (702, 802) auxquelles la pluralité de composants de contrôle d'accès (701, 801) sont connectés et avec lesquelles la pluralité de composants de contrôle d'accès (701, 801) sont configurés pour échanger des informations de signalisation de gestion de session et des informations de gestion de mobilité que le composant de gestion de mobilité (704, 804).

12. Agencement de réseau de communication selon l'une quelconque des revendications 1 à 11, dans lequel chacun d'au moins quelques-uns de la pluralité de composants de contrôle d'accès (701, 801) est combiné avec un composant de réseau d'accès radio de plan de contrôle respectif.
